# EUROPEAN PATENT SPECIFICATION

(11) **EP 2 105 825 B1**
(45) Date of publication and mention of the grant of the patent: **12.01.2011**
(21) Application number: 08153462.0
(22) Date of filing: 27.03.2008
(51) Int. Cl.: G06F 3/041

(54) **Electronic device and tactile touch screen display**
Elektronische Vorrichtung und Touchscreenanzeige
Dispositif électronique et affichage à écran tactile

(43) Date of publication of application: 30.09.2009
(73) Proprietor: RESEARCH IN MOTION LIMITED, Waterloo, Ontario N2L 3W8 (CA)
(72) Inventor: Eldershaw, Michael Keith, Oakville Ontario L6L 3R5 (CA)
(74) Representative: MERH-IP Matias Erny Reichl Hoffmann

(56) References cited:
- EP-A- 0 434 314
- WO-A-00/60535
- DE-U1- 20 110 595

## Description

The present application relates generally to electronic devices with touch-sensitive input screens and the manufacture of touch-sensitive input screens.

Electronic devices, including portable electronic devices, have gained widespread use and can provide a variety of functions including, for example, telephonic, electronic messaging and other personal information manager (PIM) application functions. Portable electronic devices can include several types of devices including mobile stations such as simple cellular telephones, smart telephones, wireless PDAs, and laptop computers with wireless 802.11 or Bluetooth capabilities. These devices run on a wide variety of networks from data-only networks such as Mobitex and DataTAC to complex voice and data networks such as GSM/GPRS, CDMA, EDGE, UMTS and CDMA2000 networks.

Devices such as PDAs or smart telephones are generally intended for handheld use and easy portability. Smaller devices are generally desirable for portability. A touch screen input/output device is particularly useful on such handheld devices as such handheld devices are small and are therefore limited in space available for user input and output devices. Further, the screen content on the touch screen devices can be modified depending on the functions and operations being performed.

Touch screen devices include a display, such as a liquid crystal display, with a touch-sensitive overlay exposed for input and output. These touch screen devices suffer from inherent disadvantages relating to user interaction and response, however. For example, such touch screen devices fail to provide user-desirable tactile feedback for positively indicating input. Poor or no tactile feedback causes difficulty in discerning whether or not an intended input has been received and can result in receipt of erroneous input at the device, for example, by additional or double input.

DE20110595 discloses a retaining device for a flat touch-screen display. The retaining device includes an elastic positioning element and a vibration damping element fixed to the sides of a support tray. The positioning element includes rubber cylinders that are fixed to the touch screen support tray and to the frame using retaining bolts and retaining screws. A gel damper (vibration damping element) is held in place using retaining screws.

Improvements in touch screen devices are therefore desirable.

### GENERAL

A touch screen display assembly may comprise a display device, a touch-sensitive overlay disposed on the display device, a support tray comprising a tray base and a lip connected to and spaced from the tray base for supporting the display device and touch-sensitive overlay, and a plurality of complaint pads on an exterior of the support tray including pads on the tray base and pads on the lip, wherein the pads are overmolded on the support tray in a mechanical interlock.

An electronic device may comprise a housing with a back and a frame, and a touch screen display assembly. Components may be housed in the housing and include a touch screen controller connected to the touch-sensitive overlay and a processor connected to the display device and the touch-screen controller, The support tray may be spaced from the back of the housing and the plurality of pads comprise pads between the base tray and the back and pads between the lip and the frame.

A method of manufacturing a touch screen display assembly may comprise placing the support tray in a mold, closing the mold, injecting gel into the mold to form the plurality of compliant pads on the support tray, allowing the compliant pads to cool, and removing the support tray including the compliant pads from the mold.

### BRIEF DESCRIPTION OF THE DRAWINGS

Embodiments of the present application will now be described, by way of example only, with reference to the attached Figures, wherein:

Figure 1 is a simplified block diagram of components of a portable electronic device according an embodiment;

Figure 2 is a top view of a portable electronic device according to an embodiment;

Figure 3 is a simplified sectional side view of the portable electronic device of Figure 2;

Figure 4 is a perspective view of a support tray assembly of the portable electronic device, showing hidden detail;

Figure 5 is a perspective view of a corner of the support tray assembly of Figure 4, showing hidden detail and drawn to a larger scale;

Figure 6 is a perspective view of a side of the support tray assembly of Figure 4, showing hidden detail and drawn to a larger scale;

Figure 7 is a simplified sectional side view of the portable electronic device of Figure 3, showing a force applied to one side; and

Figure 8 is a flow chart showing steps in a method of manufacturing a support tray assembly according to an embodiment.

### DESCRIPTION OF PREFERRED EMBODIMENTS

It will be appreciated that for simplicity and clarity of illustration, where considered appropriate, reference numerals may be repeated among the Figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limited to the scope of the embodiments described herein.

The application generally relates to an electronic device, which in the embodiments described herein is a portable electronic device. Examples of portable electronic devices include mobile, or handheld, wireless communication devices such as pagers, cellular phones, cellular smart-phones, wireless organizers, personal digital assistants, wirelessly enabled notebook computers and the like.

The portable electronic device may be a two-way communication device with advanced data communication capabilities including the capability to communicate with other portable electronic devices or computer systems through a network of transceiver stations. The portable electronic device may also have the capability to allow voice communication. Depending on the functionality provided by the portable electronic device, it may be referred to as a data messaging device, a two-way pager, a cellular telephone with data messaging capabilities, a wireless Internet appliance, or a data communication device (with or without telephony capabilities). The portable electronic device may also be a portable device without wireless communication capabilities as a handheld electronic game device, digital photograph album, digital camera and the like.

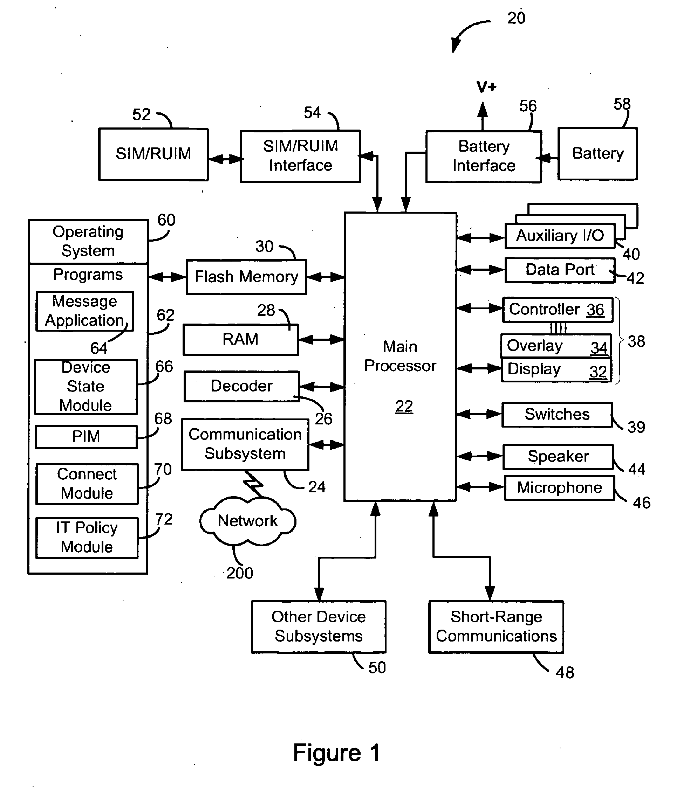

Reference is first made to Figure 1, which shows a block diagram of an exemplary embodiment of a portable electronic device 20. The portable electronic device 20 includes a number of components such as the processor 22 that controls the overall operation of the portable electronic device 20. Communication functions, including data and voice communications, are performed through a communication subsystem 24. Data received by the portable electronic device 20 can be decompressed and decrypted by a decoder 26, operating according to any suitable decompression techniques (e.g. YK decompression, and other known techniques) and encryption techniques (e.g. using an encryption technique such as Data Encryption Standard (DES), Triple DES, or Advanced Encryption Standard (AES)). The communication subsystem 24 receives messages from and sends messages to a wireless network 200. In this exemplary embodiment of the portable electronic device 20, the communication subsystem 24 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 24 with the wireless network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 200 associated with the portable electronic device 20 is a GSM/GPRS wireless network in one exemplary implementation, other wireless networks may also be associated with the portable electronic device 20 in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA1000 networks, GSM/GPRS networks (as mentioned above), and future third-generation (3G) networks like EDGE and UMTS. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems.

The processor 22 also interacts with additional subsystems such as a Random Access Memory (RAM) 28, a flash memory 30, a display 32 with a touch-sensitive overlay 34 connected to an electronic controller 36 that together are part of a touch screen display 38, switches 39 for providing additional input in combination with the touch screen display 38, an auxiliary input/output (I/O) subsystem 40, a data port 42, a speaker 44, a microphone 46, short-range communications 48 and other device subsystems 50. The touch-sensitive overlay 34 and the electronic controller 36 provide a touch-sensitive input device and the processor 22 interacts with the touch-sensitive overlay 34 via the electronic controller 36.

Some of the subsystems of the portable electronic device 20 perform communication-related functions, whereas other subsystems may provide "resident" or on-device functions. By way of example, the display 32 and the touch-sensitive overlay 34 may be used for both communication-related functions, such as entering a text message for transmission over the network 200, and device-resident functions such as a calculator or task list.

The portable electronic device 20 can send and receive communication signals over the wireless network 200 after network registration or activation procedures have been completed. Network access is associated with a subscriber or user of the portable electronic device 20. To identify a subscriber according to the present embodiment, the portable electronic device 20 uses a SIM/RUIM card 52 (i.e. Subscriber Identity Module or a Removable User Identity Module) inserted into a SIM/RUIM interface 54 for communication with a network such as the network 200. The SIM/RUIM card 52 is one type of a conventional "smart card" that can be used to identify a subscriber of the portable electronic device 20 and to personalize the portable electronic device 20, among other things. In the present embodiment the portable electronic device 20 is not fully operational for communication with the wireless network 200 without the SIM/RUIM card 52. By inserting the SIM/RUIM card 52 into the SIM/RUIM interface 54, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM/RUIM card 52 includes a processor and memory for storing information. Once the SIM/RUIM card 52 is inserted into the SIM/RUIM interface 54, it is coupled to the processor 22. In order to identify the subscriber, the SIM/RUIM card 52 can include some user parameters such as an International Mobile Subscriber Identity (IMSI). An advantage of using the SIM/RUIM card 52 is that a subscriber is not necessarily bound by any single physical portable electronic device. The SIM/RUIM card 52 may store additional subscriber information for a portable electronic device as well, including datebook (or calendar) information and recent call information. Alternatively, user identification information can also be programmed into the flash memory 30.

The portable electronic device 20 is a battery-powered device and includes a battery interface 56 for receiving one or more rechargeable batteries 58. In at least some embodiments, the battery 58 can be a smart battery with an embedded microprocessor. The battery interface 56 is coupled to a regulator (not shown), which assists the battery 58 in providing power V+ to the portable electronic device 20. Although current technology makes use of a battery, future technologies such as micro fuel cells may provide the power to the portable electronic device 20.

The portable electronic device 20 also includes an operating system 60 and software components 62 to 72 which are described in more detail below. The operating system 60 and the software components 62 to 72 that are executed by the processor 22 are typically stored in a persistent store such as the flash memory 30, which may alternatively be a read-only memory (ROM) or similar storage element (not shown). Those skilled in the art will appreciate that portions of the operating system 60 and the software components 62 to 72, such as specific device applications, or parts thereof, may be temporarily loaded into a volatile store such as the RAM 28. Other software components can also be included, as is well known to those skilled in the art.

The subset of software applications 62 that control basic device operations, including data and voice communication applications, will normally be installed on the portable electronic device 20 during its manufacture. Other software applications include a message application 64 that can be any suitable software program that allows a user of the portable electronic device 20 to send and receive electronic messages. Various alternatives exist for the message application 64 as is well known to those skilled in the art. Messages that have been sent or received by the user are typically stored in the flash memory 30 of the portable electronic device 20 or some other suitable storage element in the portable electronic device 20. In at least some embodiments, some of the sent and received messages may be stored remotely from the device 20 such as in a data store of an associated host system that the portable electronic device 20 communicates with.

The software applications can further include a device state module 66, a Personal Information Manager (PIM) 68, and other suitable modules (not shown). The device state module 66 provides persistence, i.e. the device state module 66 ensures that important device data is stored in persistent memory, such as the flash memory 30, so that the data is not lost when the portable electronic device 20 is turned off or loses power.

The PIM 68 includes functionality for organizing and managing data items of interest to the user, such as, but not limited to, e-mail, contacts, calendar events, voice mails, appointments, and task items. A PIM application has the ability to send and receive data items via the wireless network 200. PIM data items may be seamlessly integrated, synchronized, and updated via the wireless network 200 with the portable electronic device subscriber's corresponding data items stored and/or associated with a host computer system. This functionality creates a mirrored host computer on the portable electronic device 20 with respect to such items. This can be particularly advantageous when the host computer system is the portable electronic device subscriber's office computer system.

The portable electronic device 20 also includes a connect module 70, and an information technology (IT) policy module 72. The connect module 70 implements the communication protocols that are required for the portable electronic device 20 to communicate with the wireless infrastructure and any host system, such as an enterprise system, that the portable electronic device 20 is authorized to interface with.

The connect module 70 includes a set of APIs that can be integrated with the portable electronic device 20 to allow the portable electronic device 20 to use any number of services associated with the enterprise system. The connect module 70 allows the portable electronic device 20 to establish an end-to-end secure, authenticated communication pipe with the host system. A subset of applications for which access is provided by the connect module 70 can be used to pass IT policy commands from the host system to the portable electronic device 20. This can be done in a wireless or wired manner. These instructions can then be passed to the IT policy module 72 to modify the configuration of the device 20. Alternatively, in some cases, the IT policy update can also be done over a wired connection.

Other types of software applications can also be installed on the portable electronic device 20. These software applications can be third party applications, which are added after the manufacture of the portable electronic device 20. Examples of third party applications include games, calculators, utilities, etc.

The additional applications can be loaded onto the portable electronic device 20 through at least one of the wireless network 200, the auxiliary I/O subsystem 40, the data port 42, the short-range communications subsystem 48, or any other suitable device subsystem 50. This flexibility in application installation increases the functionality of the portable electronic device 20 and may provide enhanced on-device functions, communication-related functions, or both. For example, secure communication applications may enable electronic commerce functions and other such financial transactions to be performed using the portable electronic device 20.

The data port 42 enables a subscriber to set preferences through an external device or software application and extends the capabilities of the portable electronic device 20 by providing for information or software downloads to the portable electronic device 20 other than through a wireless communication network. The alternate download path may, for example, be used to load an encryption key onto the portable electronic device 20 through a direct and thus reliable and trusted connection to provide secure device communication.

The data port 42 can be any suitable port that enables data communication between the portable electronic device 20 and another computing device. The data port 42 can be a serial or a parallel port. In some instances, the data port 42 can be a USB port that includes data lines for data transfer and a supply line that can provide a charging current to charge the battery 58 of the portable electronic device 20.

The short-range communications subsystem 48 provides for communication between the portable electronic device 20 and different systems or devices, without the use of the wireless network 200. For example, the short-range communications subsystem 48 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download is processed by the communication subsystem 24 and inputto the processor 22. The processor 22 then processes the received signal for output to the display 32 or alternatively to the auxiliary I/O subsystem 40. A subscriber may also compose data items, such as e-mail messages, for example, using the touch-sensitive overlay 34 on the display 32 that are part of the touch screen display 38, and possibly the auxiliary I/O subsystem 40. The auxiliary subsystem 40 may include devices such as: a mouse, track ball, infrared fingerprint detector, or a roller wheel with dynamic button pressing capability. A composed item may be transmitted over the wireless network 200 through the communication subsystem 24.

For voice communications, the overall operation of the portable electronic device 20 is substantially similar, except that the received signals are output to the speaker 44, and signals for transmission are generated by the microphone 46. Alternative voice or audio I/O subsystems, such as a voice message recording subsystem, can also be implemented on the portable electronic device 20. Although voice or audio signal output is accomplished primarily through the speaker 44, the display 32 can also be used to provide additional information such as the identity of a calling party, duration of a voice call, or other voice call related information.

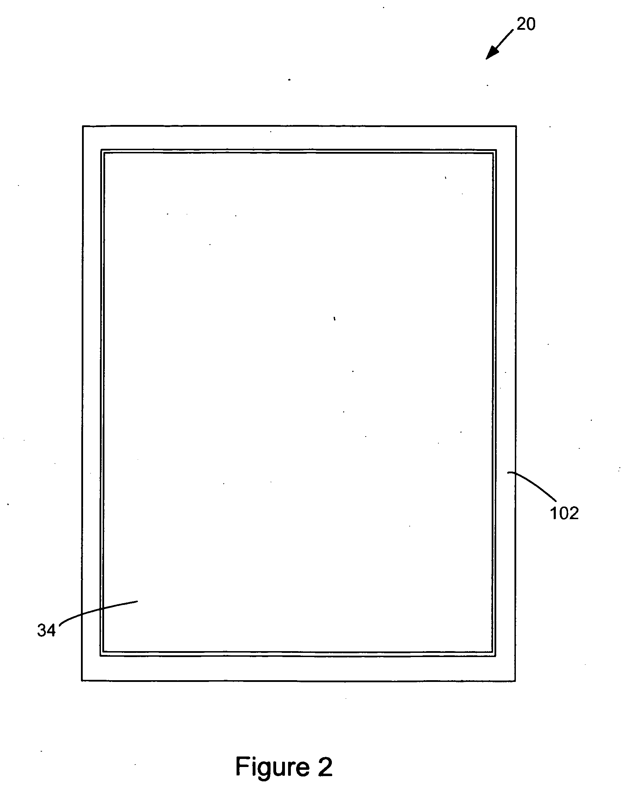

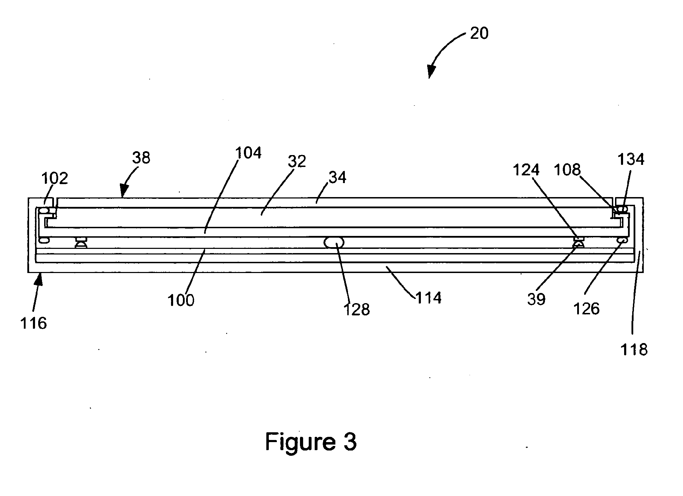

Reference is now made to Figures 2 and 3, which show a front view and a simplified sectional side view, respectively, of an exemplary portable electronic device 20. The portable electronic device 20 includes a housing 116 that includes a back 114 and a frame 102 connected to and spaced from the back 114. A support tray 104 is spaced from the back 114 and includes a tray base 106 and a lip 108 connected to and spaced from the tray base 106. The display device 32 and touch-sensitive overlay 34 disposed on the display device 32 are supported by the support tray 104 and disposed between the tray base 106 and the lip 108. In the present embodiment, the lip 108 is formed separate of the tray base 106 and is attached to tray sides on the tray base 106. A plurality of gel pads 110 are located on an exterior of the support tray 104 including gel pads between the tray base 106 and the back 114 and gel pads between the lip 108 and the frame 102. Operational components are located in the housing 116, including the touch screen controller 36 connected to the touch-sensitive overlay 34 and the processor 22 connected to the display device 32 and the touch-screen controller 32.

Continued reference is made to Figures 2 and 3 to describe an embodiment of the tactile touch screen display for the portable electronic device 20. The portable electronic device 20 includes the housing 116 that houses the internal components shown in Figure 1 and frames the touch screen display 38 such that the touch-sensitive overlay 34 is exposed for user interaction therewith when the portable electronic device 20 is in use. The housing 116 includes a back 114, the frame 102, which frames the touch screen display 38, sidewalls 118 that extend between and generally perpendicular to the back 114 and the frame 102; and a rigid base 100 that is spaced from and generally parallel to the back 114. The base 100 can be any suitable base and can include, for example, a printed circuit board or flex circuit board. The back 114 includes a plate (not shown) that is releasably attached for insertion and removal of, for example, the battery 58 and the SIM/RUIM card 62 described above. It will be appreciated that the back 114, the sidewalls 118 and the frame 102 can be injection molded, for example. According to the embodiment shown in Figure 1, the frame 102 is generally rectangular although other shapes are possible. For example, the corners of the frame 102 can be rounded. Although not shown, the portable electronic device 20 can also include display stops for limiting movement of the support tray 104 including the touch screen display 38. The support stops can be any suitable display stops such as ledges or posts that extend from the base 100 for inhibiting movement of the support tray 104 including the touch screen display 38 past a desired point during pivoting.

It will be appreciated that the touch screen display 38 is an assembly of components including, the touch-sensitive overlay 34 overlying the LCD display device 32 and other components including optional components such as a backlight (not shown). The touch screen display 38 is biased away from the base 100, toward the frame 102 by the gel pads 114 and includes the support tray 104 for providing structural support and for inhibiting bending causing damage or breaking of the LCD display device 32 and the touch-sensitive overlay 34 of the touch screen display 38. The support tray 104 can be made from any suitable material such as magnesium. The support tray 104 includes the tray base 106 on which the assembly of touch screen display components is seated, Tray sides 122 and the lip 108. The tray sides 122 extend away from the tray base 106, surrounding a portion of the edges of the LCD display device 32 and the touch-sensitive overlay 34, to protect and support the edges of the LCD display device 32 and the touch-sensitive overlay 34 and the lip 108 extends inwardly from each of the tray sides 122. In the portable electronic device 20, the lip 108 is adjacent the underside of the frame 102, as shown in Figure 3, such that the frame 102 maintains the touch screen display 38 within the housing 116. Thus, the touch screen display 38 is moveable within and constrained by the housing 102.

Two switches 39 are located between the base 100 and the tray base 106 for providing additional input and for providing tactile feedback to a user when pressing on the touch screen display 38. The switches 39 can be any suitable mechanical switches, such as dome-type switches, located such that displacement of the touchscreen display 38 resulting from a user pressing the touchscreen display 38 actuates a respective one of the switches 39. In the present embodiment, each of the pair of switches 39 is disposed on a respective side of center of the portable electronic device 20, proximal respective short ones of the sidewalls 118 with each switch 39 in contact with the support tray 104. Thus, displacement of the touchscreen display 38 as a result of user application of a force thereto causes actuation of a respective one of the switches 39, thereby providing the user with positive tactile feedback during user interaction with the user interface of the portable electronic device 20.

The touch-sensitive overlay 34 can be any suitable touch-sensitive surface such as a resistive or a capacitive touch-sensitive surface. Thus, the touch-sensitive overlay 34 includes a number of layers in a stack and is fixed to the display 32 via a suitable optically clear adhesive. The layers in the stack are dependent on the type of touch-screen display.

The display device 32 provides graphical representations that are selectable or manipulatable by user interaction with the touch-sensitive overlay 34 of the touch screen display 38. In the present example, the X and Y location of a touch event are both determined based on the signals received at the controller 36 from the touch-sensitive overlay 34. It will be appreciated that a user's touch on the touch screen display 38 is determined by determining the X and Y touch location and user-selected input is determined based on the X and Y touch location and the application executed by the processor 22.

The switches 39 provide additional input as actuation of either of the mechanical switches 39 by user application of a sufficient force generates a further signal input to the processor 22. The further signal from the actuation of one of the mechanical switches 39 can cause the initiation of commands at the processor 22, either alone or resulting from the combination of the signal from the mechanical switch and signals from the touch sensitive input surface 26. Thus, commands initiated at the processor 40 can be a result of the signal generated from the single mechanical switch 30 alone or a result of the signal generated from the single mechanical switch 30 in combination with signals from the touch sensitive input surface 26 caused by user interaction. User interaction can be, for example, the user touching the touch screen display 38 or the user sliding a finger along the touch screen display 38. Different sliding actions of the finger along the touch screen display 38 can also result in different commands initiated at the processor 22.

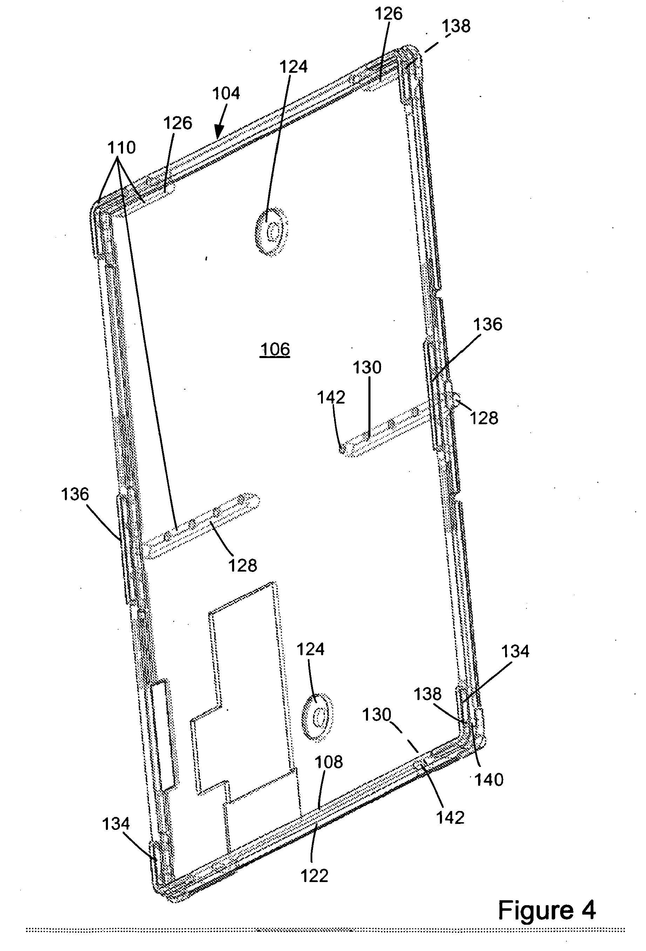

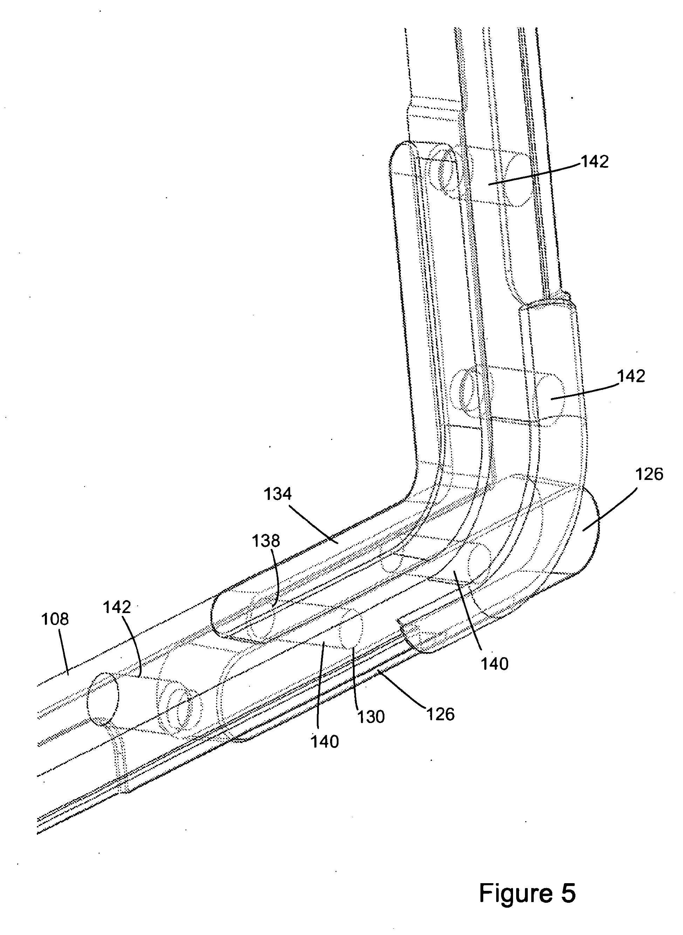

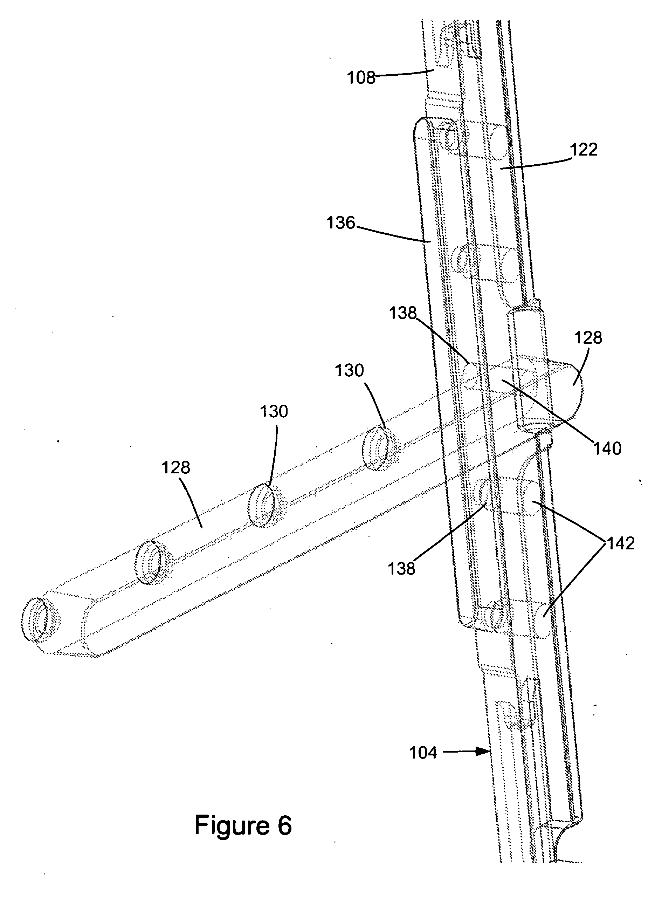

Reference is now made to Figures 4 to 6 to describe the support tray 104 in further detail. As described, the support tray 104 includes the generally rectangular tray base 106 on which the LCD display device 32 are seated. The support tray 104 is generally flat but can include, for example, actuators 124 for contacting and actuating respective ones of the switches 39 when the portable electronic device 20 is in use. The actuators 124 can be any suitable shape and can be made of any suitable material. In the present embodiment, the support tray 104 is made of a suitable metal, such as magnesium, and the actuators 124 can be formed in the tray base 106 by, for example, mechanical deformation to provide small cylindrical protrusions extending away from the LCD display device 32. The tray base 106 also includes an opening through which connections can be made between the operational components such as the processor 22 and the controller 36, described above with reference to Figure 1, and the LCD display device 32 and touch-sensitive overlay 34.

As described, the tray sides 122 extend generally perpendicularly away from the tray base 106 for circumscribing the edges of the LCD display device 32 and the touch-sensitive overlay 34. The lip 108 extends inwardly from each of the tray sides 122 for holding ones of the gel pads 110 for interacting with the frame 102 of the housing 116. As indicated above, the support tray 104 including the tray base 106, tray sides 122, and lip 108 can be formed, cast or molded in any suitable manner.

Both the tray base 100 and the lip 108 each include a plurality of through-holes formed therein for injection molding of the gel pads 110 and for retaining the gel pads 110 in connection with the support tray 104. As indicated, a plurality of gel pads are disposed in the portable electronic device 20, between the base 100 and the support tray 104. Other gel pads are disposed between the support tray 104 and the frame 102 of the housing 116.

In the present embodiment, six gel pads 110 are disposed on a back side of the support tray 104, distal the tray sides 122 and the lip 108. Of the six gel pads 110 disposed on the back side of the support tray 104, four back side corner gel pads 126 are located near the corners of the support tray 104, with each of the corner gel pads 126 near a respective corner, and two pivot gel pads 128 extend inwardly from long sides of the support tray 104, toward the center. Each of the back side corner gel pads 126 extend from a respective one of the corners, partially along a short side of the support tray 104. Thus, two back side corner gel pads 126 extend along each short side of the support tray 104 from each corner along the short side. The back side corner gel pads 126 have a generally obround cross-section and are connected to the support tray 104 via the through-holes 130 in the tray base 106.

The two pivot gel pads 128 extend inwardly toward the center of the tray base 106, each extending from a center of a respective long side of the tray base 106. The two pivot gel pads 128 also have a generally obround cross-section and are connected to the support tray 104 via through-holes 130 in the tray base 106. The pivot gel pads 128 are larger than the back side corner gel pads 126 in that the pivot gel pads 128 extend farther away from the back side of the tray base 106 for contacting the base 100 of the portable electronic device 20.

Six gel pads 110 are also disposed on the lip 108 of the support tray 104, extending away from the lip 108 and the tray base 106. The six gel pads 110 disposed on the lip 108 include four lip corner gel pads 134 located at the corners of the lip 108 and two lip side gel pads 136 extending along the long sides of the lip 108. Each of the lip corner gel pads 134 extends around a respective corner of the lip 108, partially along each of one short side and one long side of the lip 108. Thus, portions of two lip corner gel pads 134 extend along each long side and portions of two lip corner gel pads 134 extend along each short side of the lip 108. Thus, in the present embodiment, the lip corner gel pads 134 include a right angle as portions of the same lip corner gel pad 134 extend perpendicularly to each other. Each of the lip corner gel pads 134 is connected to the support tray 104 via through-holes 130 in the lip 108.

The lip side gel pads 136 extend along and are centered on the long sides of the lip 108. Like the back side corner gel pads 126, the lip side gel pads 136 have a generally obround cross-section and are connected to the support tray 104 via through-holes 138 in the lip 108. The gel pads on the lip 108 including the lip corner gel pads 134 and the lip side gel pads 136 are small by comparison to the pivot gel pads 128 in that the pivot gel pads 128 extend a greater distance from the support tray 104.

As indicated, each of the gel pads 126, 128 on the back side of the support tray 104 are connected to the support tray 104 via through-holes 130 in the tray base 106 and each of the gel pads 134, 136 on the lip 108 are connected to the support tray 104 via through-holes 138 in the lip 108. The connection is made by gel pad extensions through the through-holes 130. Referring first to the back side corner gel pads 126, each back side corner gel pad 126 is connected to the support tray 104 by interconnecting cylindrical extensions 140 that extend between the back side corner gel pad 126 and a respective one of the lip corner gel pads 134. Thus, these interconnecting cylindrical extensions 140 extend from the back side corner gel pad 126, through respective through-holes 130 in the tray base 106 and through respective through-holes in the lip 138, to a respective one of the lip corner gel pads 134. These interconnecting cylindrical extensions 140 connect the back side corner gel pad 126 to the tray base 106 and the lip corner gel pads 134 to the lip 108 and are created during a gel pad overmolding process by a channel between cavities in a mold for forming the back side corner gel pad 126 and the lip corner gel pads 134. Each back side corner gel pad 126 is also connected to the support tray 104 by a mushroom cap extension 142. The mushroom cap extension 142 includes a portion that extends through a respective through-hole 130 in the tray base 106 and a head on the opposite side of the tray base 106 that is larger in diameter than the through-hole 130. In the present embodiment, the head is cylindrical and extends between the tray base 106 and the lip 108. The lip corner gel pads 134 are each connected to the support tray 104 by the interconnecting cylindrical extensions 140 as described above and by mushroom cap extensions 142

The pivot gel pads 128 on the backside of the tray base 106 are also connected to the support tray 104 by a combination of mushroom cap extensions 140 and interconnecting cylindrical extensions 140. As best shown in Figure 4, each of the pivot gel pads 128 is connected to a respective one of the lip side gel pads 136 by a respective interconnecting cylindrical extension 140 that extends between the pivot gel pad 128 and the lip side gel pad 136, through a respective through-hole 130 in the tray base 106 and through a respective through-hole 138 in the lip 108. In the present embodiment, each pivot gel pad 128 is also connected to the support tray 104 by four mushroom cap extensions 142 that each include a portion that extends through a respective through-hole 130 in the tray base 106 and a head on the opposite side of the tray base 106 that is larger in diameter than the through-hole 130. The head of the mushroom cap extensions 142 of the pivot gel pads is shorter than the head of the mushroom cap extensions 142 of the back side corner gel pads 126 to reduce interference with the LCD display device 32 in the support tray 104. Each of the lip side gel pads 136 is also connected to the support tray 104 by the interconnecting cylindrical extensions 140 as described above and by mushroom cap extensions 142 with cylindrical heads that extend between the lip 108 and the tray base 106.

Each of the gel pads 126 is compliant, providing positive tactile feedback for the user of the device and protecting the LCD display device 32 and the touch-sensitive overlay 34 as the gel pads 126 provide cushioning and dampening for absorbing energy when the touch screen 38 is depressed and for biasing the touch screen display 38 into a rest position when the an external force is removed from the touch screen display 38. The back side corner gel pads 126, for example, bias the touch screen display 38 away from the base 100 of the portable electronic device 20. The lip corner gel pads 134 and the lip side gel pads 136 are disposed between the lip 108 of the support tray 104 and the frame 102 of the housing 116 for absorbing energy and biasing the touch screen display 38, reducing stresses on the touch screen display 38 when a force is applied to the touch screen display 38 causing pivoting.

The touch screen display 38 is disposed on the support tray 104 and a retaining clip is used to secure the touch screen display 38 on the support tray 104. Thus, the LCD display device 32 and touch-sensitive overlay 34 are maintained in position, seated on the tray base 106. It will be appreciated that the touch screen display 38 can be secured on the support tray 104 in any suitable manner and is not limited to a retaining clip. For example, a pressure sensitive adhesive can be used.

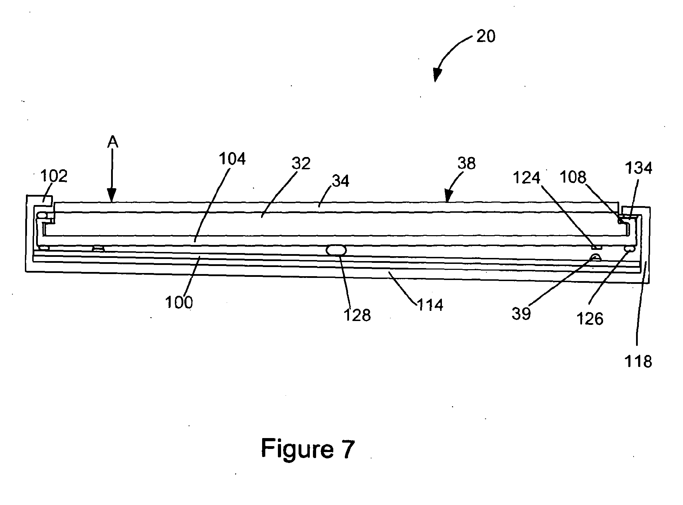

Reference is now made to Figure 7 to describe movement of the touch screen display 38 within the housing 116 of the portable electronic device 20. Figure 7 shows a simplified sectional side view of portions of the portable electronic device 20, according to one embodiment in which a force is applied by, for example, a user pressing a finger into the touch screen display 38, in the direction of the arrow "A". As shown, the user presses on the side of the touch screen display 38, resulting in pivoting of the touch screen display 38 on the pivot gel pads 128 such that the back side corner gel pads 126 that are on the same side of the portable electronic device 20 on which the force is applied are compressed between the tray base 106 and the base 100. The lip corner gel pads 134 on the opposite side of the pivot gel pads 128 are compressed between the lip 108 and the frame 102. Thus, the touch screen display 38 pivots and one of the actuators 124 actuates a respective one of the mechanical switches 39 on the same side of the portable electronic device 20 to which the force is applied. When the force on the touch screen display 38 is removed, the touch screen display 38 is biased by the gel pads into the rest position shown in Figure 3, with the tray base 106 generally parallel with the base 100 of the portable electronic device 20.

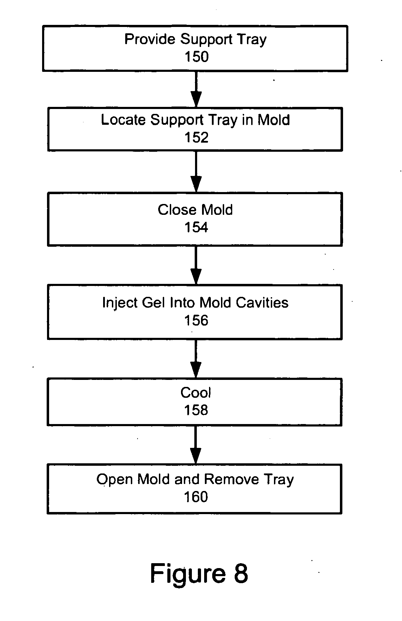

Reference is now made to Figure 8 to describe a method of manufacturing a touch screen display assembly including the support tray 104 and the gel pads 110. The support tray 150 is provided for forming the gel pads 110 (step 150). The through-holes 130, 138 in the tray base 106 and in the lip 108, respectively, can be made in any suitable manner. The support tray 104 is then loaded into a suitable mold with mold cavities for forming the gel pads 110 (step 152). The mold is closed (step 154) and gel is injected into the mold cavities for forming the gel pads 110 (step 156). Although referred to herein as a gel pads, any suitable gel-like material or moldable foam can be used to form compliant pads. For example, a thermoplastic elastomer having a shore hardness of 30 to 80 on the Shore 00 scale. The gel (or foam) is cooled in the mold using known cooling techniques (step 158) and the mold is opened to remove the support tray 160 including the gel pads 110.

Overmolding of the gel pads 110 reduces manufacturing steps and time as the gel pads 110 are formed in a single operation rather than die cutting, for example and handling of individual gel pads 110, followed by separately adhering each of the gel pads 110 to the support tray 104.

The support tray 104 including the touch screen display 38, floats with respect to the housing 116 of the portable electronic device 20 as the support tray 104 is spaced from the base 100 and spaced from the frame 102 of the housing 116 by gel pads 110. The gel pads 110 can be elastically deformed, providing a positive tactile feel for the user of the device and protecting the LCD display device 32 and the touch-sensitive overlay 34 as the gel pads 126 provide cushioning and dampening for absorbing energy when the touch screen 38 is depressed and for biasing the touch screen display 38 into a rest position when the an external force is removed from the touch screen display 38. The back side corner gel pads 126, for example, bias the touch screen display 38 away from the base 100 of the portable electronic device 20. The lip corner gel pads 134 and the lip side gel pads 136 are disposed between the lip 108 of the support tray 104 and the frame 102 of the housing 116 for absorbing energy and biasing the touch screen display 38, reducing stresses on the touch screen display 38 when a force is applied to the touch screen display 38 causing pivoting. The dampened movement of the touch screen display 38 and return to the rest position provides a positive response to the user. Thus, the support tray 104 with the gel pads 110 provides a physical feedback mechanism for determining that input has been entered, thereby reducing the chance of erroneous input at the device such as additional or double input entries resulting from an inability to discern input received at the device.

While the embodiments described herein are directed to particular implementations of the touch screen display and the portable electronic device, it will be understood that modifications and variations to these embodiments are within the scope and sphere of the present application. Also, the Figures depict one example of the portable electronic device and other shapes and configurations are possible. It will also be appreciated that the size and shape of many of the features can differ while still providing the same function. Many other modifications and variations may occur to those skilled in the art. All such modifications and variations are believed to be within the sphere and scope of the present application.

## Claims

1. A touch screen display assembly (32, 34, 104) comprising:
a display (32);
a touch-sensitive overlay (34) disposed on the display (32);
a support tray (104) comprising a tray base (106) and a lip (108) connected to and spaced from the tray base (106) for supporting the display (32) and touch-sensitive overlay (34);
a plurality of compliant pads (110, 126, 128, 134, 136) on an exterior of the support tray (104) comprising pads (126, 128) on the tray base and pads (134, 136) on the lip, wherein the pads are overmolded on the support tray in a mechanical Interlock.

2. The touch screen display assembly (32, 34, 104) according to claim 1, comprising a controller (36) connected to the touch-sensitive overlay (34) for receiving input from the touch-sensitive overlay and for connecting to a processor (22).

3. The touch screen display assembly (32, 34, 104) according to claim 1 or claim 2, wherein ones of the pads (126, 128) on the tray base (106) are connected to respective ones of the pads (134, 136) on the lip (108).

4. The touch screen display assembly (32, 34, 104) according to any one of the preceding claims, wherein the plurality of pads comprise: a respective pad (126, 134) on the tray base (106) and/or on the lip (108) at each corner of the support tray (104).

5. The touch screen display assembly (32, 34, 104) according to any one of claims 1 to 3, wherein the plurality of pads comprises at least one pad (128, 136) extending proximal a center of the tray base.

6. The touch screen display assembly (32, 34, 104) according to any one of claims 1 to 3, wherein the plurality of pads comprise respective pads (128) extending inwardly toward a center of the tray base from opposing sides thereof.

7. The touch screen display assembly (32, 34, 104) according to any one of claims 1 to 3, wherein the plurality of pads comprise respective pads (126,134) extending on the lip, at opposing sides of the support tray.

8. The touch screen display assembly (32, 34, 104) according to any one of the preceding claims wherein the pads (110, 126, 128, 134, 136) comprise a gel or a foam material.

9. The touch screen display assembly (32, 34, 104) according to any one of claims 1 to 7 wherein the pads (110, 126, 128, 134, 136) comprise a thermoplastic elastomer.

10. The touch screen display assembly (32, 34, 104) according to claim 9, wherein the pads (110, 126, 128, 134, 136) have a shore hardness of in the order of 30 to in the order of 80 on the shore 00 scale.

11. An electronic device (20) comprising:
a housing (116) comprising a back (114) and a frame (102);
a touch screen display assembly (32, 34, 104) according to any one of claims 1 to 9;
components housed in the housing (116) and comprising a touch screen controller (36) connected to the touch-sensitive overlay (34) and a processor (22) connected to the display (32) and the touch-screen controller (36);
wherein the support tray (104) is spaced from the back (114) of the housing (116) and the plurality of pads (110, 126, 128, 134, 136) comprise pads (126, 128) between the base tray (106) and the back (116) and pads (134, 136) between the lip (108) and the frame (102).

12. The electronic device (20) according to claim 11, comprising a base (100) disposed between the back (114) and the frame (102) and wherein the pads (126, 128) between the tray base (106) and the back (114) comprise pads between the tray base (106) and the base (100).

13. The electronic device (20) according to claim 12, wherein the pads between the tray base (106) and the base (100) comprise at least one pivot pad (128) for the support tray (104) to pivot on.

14. The electronic device (20) according to claim 11 or claim 12, wherein ones of the pads (126, 128) between the tray base (106) and the back (114) are connected to respective ones of the pads (134, 136) between the lip (108) and the frame (102).

15. A method of manufacturing the support tray according to any one of claims 1 to 7, comprising:
placing the support tray (104) in a mold;
closing the mold;
injecting gel or foam into the mold to form the plurality of compliant pads (110, 126, 128, 134, 136) on the support tray (104);
allowing the plurality of compliant pads (110, 126, 128, 134, 136) to cool;
removing the support tray (104) including the plurality of compliant pads (110, 126, 128, 134, 136) from the mold.

16. The method according to claim 15, wherein injecting gel comprises:
injecting gel or foam at least at each corner of the support tray (104),

17. The method according to claim 16, wherein injecting gel or foam comprises injecting gel or foam proximal center locations along long sides of the support tray (104).

18. The method according to claim 15, wherein injecting gel or foam comprises injecting a thermoplastic elastomer into the mold,

19. The method according to claim 18, wherein injecting a thermoplastic elastomer comprises injecting a thermoplastic elastomer having a shore hardness of in the order of 30 to in the order of 80 on the shore 00 scale.

## Patentansprüche

1. Berührungsbildschirm-Anzeigebaugruppe (32, 34,104), die aufweist:
ein Anzeige (32);
eine berührungsempfindliche Überlagerung (34), die auf der Anzeige (32) angeordnet ist;
ein Halterungseinsatz (104), der eine Einsatzbasis (106) und eine Lippe (108) aufweist, die mit der Einsatzbasis (106) mit Abstand verbunden ist, zum Tragen der Anzeige (32) und der berührungsempfindlichen Überlagerung (34);
eine Vielzahl von nachgiebigen Kissen (110, 126, 128, 134, 136) auf einer Außenseite des Halterungseinsatzes (126, 128), die Kissen (126, 128) an der Einsatzbasis und Kissen (134, 136) an der Lippe aufweisen, wobei die Kissen an dem Halterungseinsatz in einer mechanischen Verriegelung angeformt sind.

2. Berührungsbildschirm-Anzeigebaugruppe (32, 34, 104) gemäß Anspruch 1, die eine Steuervorrichtung (36) aufweist, die mit der berührungsempfindlichen Überlagerung (34) verbunden ist, zum Empfangen einer Eingabe von der berührungsempfindlichen Überlagerung und zum Anschluss an einen Prozessor (22).

3. Berührungsbildschirm-Anzeigebaugruppe (32, 34,104) gemäß Anspruch 1 oder Anspruch 2, wobei Kissen (126, 128) an der Einsatzbasis (106) mit jeweiligen der Kissen (134, 136) an der Lippe (108) verbunden sind.

4. Berührungsbildschirm-Anzeigebaugruppe (32, 34,104) gemäß einem der vorhergehenden Ansprüche, wobei die Vielzahl von Kissen aufweist: ein jeweiliges Kissen (126, 134) an der Einsatzbasis (106) und/oder an der Lippe (108) an jeder Ecke des Halterungseinsatzes (104).

5. Berührungsbildschirm-Anzeigebaugruppe (32, 34, 104) gemäß einem der Ansprüche 1 bis 3, wobei die Vielzahl von Kissen zumindest ein Kissen (128, 136) aufweist, das sich in der Nähe einer Mitte der Einsatzbasis erstreckt.

6. Berührungsbildschirm-Anzeigebaugruppe (32, 34, 104) gemäß einem der Ansprüche 1 bis 3, wobei die Vielzahl von Kissen jeweilige Kissen (128) aufweist, die sich nach innen zu einer Mitte der Einsatzbasis von deren gegenüberliegenden Seiten erstrecken.

7. Berührungsbildschirm-Anzeigebaugruppe (32, 34, 104) gemäß einem der Ansprüche 1 bis 3, wobei die Vielzahl von Kissen jeweilige Kissen (126, 134) aufweist, die sich an der Lippe an gegenüberliegenden Seiten des Halterungseinsatzes erstrecken.

8. Berührungsbildschirm-Anzeigebaugruppe (32, 34, 104) gemäß einem der vorhergehenden Ansprüche, wobei die Kissen (110, 126, 128, 134, 136) ein Gel oder ein Schaumstoff-Material aufweisen.

9. Berührungsbildschirm-Anzeigebaugruppe (32, 34, 104) gemäß einem der Ansprüche 1 bis 7, wobei die Kissen (110, 126, 128, 134, 136) ein thermoplastisches Elastomer aufweisen.

10. Berührungsbildschirm-Anzeigebaugruppe (32, 34, 104) gemäß Anspruch 9, wobei die Kissen (110, 126, 128, 134, 136) eine Shore-Härte in dem Bereich von 30 bis in dem Bereich von 80 auf der Shore-00-Skala haben.

11. Elektronische Vorrichtung (20), die aufweist:
ein Gehäuse (116), das eine Rückseite (114) und einen Rahmen (102) aufweist;
eine Berührungsbildschirm-Anzeigebaugruppe (32, 34, 104) gemäß einem der Ansprüche 1 bis 9;
Komponenten, die in dem Gehäuse (116) untergebracht sind und eine Berührungsbildschirmsteuervorrichtung (36) aufweisen, die mit der berührungsempfindlichen Überlagerung (34) verbunden ist, und einen Prozessor (22), der mit der Anzeige (32) und der Berührungsbildschirmsteuervorrichtung (36) verbunden ist;
wobei der Halterungseinsatz (104) von der Rückseite (114) des Gehäuses (116) beabstandet ist und die Vielzahl von Kissen (110, 126, 128, 134, 136) Kissen (126, 128) zwischen dem Basiseinsatz (106) und der Rückseite (116) und Kissen (134, 136) zwischen der Lippe (108) und dem Rahmen (102) aufweisen.

12. Elektronische Vorrichtung (20) gemäß Anspruch 11, die eine Basis (100) aufweist, die zwischen der Rückseite (116) und dem Rahmen (102) angeordnet ist, und wobei die Kissen (126, 128) zwischen der Einsatzbasis (106) und der Rückseite (114) Kissen zwischen der Einsatzbasis (106) und der Basis (100) aufweisen.

13. Elektronische Vorrichtung (20) gemäß Anspruch 12, wobei die Kissen zwischen der Einsatzbasis (106) und der Basis (100) zumindest ein Drehpunkt-Kissen (128) aufweisen, auf dem der Halterungseinsatz (104) schwenkbar ist.

14. Elektronische Vorrichtung (20) gemäß Anspruch 11 oder Anspruch 12, wobei Kissen (126, 128) zwischen der Einsatzbasis (106) und der Rückseite (114) mit jeweiligen Kissen (134, 136) zwischen der Lippe (108) und dem Rahmen (102) verbunden sind.

15. Verfahren zur Herstellung des Halterungseinsatzes gemäß einem der Ansprüche 1 bis 7, das aufweist:
Platzieren des Halterungseinsatzes (104) in einer Form;
Schließen der Form;
Einbringen von Gel oder Schaumstoff in die Form, um die Vielzahl von nachgiebigen Kissen (110, 126, 128, 134, 136) auf dem Halterungseinsatz (104) zu bilden;
Abkühlen lassen der Vielzahl von nachgiebigen Kissen (110, 126, 128, 134, 136);
Entfernen des Halterungseinsatzes (104) mit der Vielzahl von nachgiebigen Kissen (110, 126, 128, 134, 136) aus der Form.

16. Verfahren gemäß Anspruch 15, wobei ein Einbringen des Gels aufweist:
Einbringen von Gel oder Schaumstoff zumindest an jeder Ecke des Halterungseinsatzes (104).

17. Verfahren gemäß Anspruch 16, wobei ein Einbringen des Gels oder Schaumstoffs aufweist ein Einbringen von Gel oder Schaumstoff in der Nähe von Mittepositionen entlang von langen Seiten des Halterungseinsatzes (104).

18. Verfahren gemäß Anspruch 15, wobei ein Einbringen des Gels oder Schaumstoffs ein Einbringen eines thermoplastischen Elastomers in die Form aufweist.

19. Verfahren gemäß Anspruch 18, wobei ein Einbringen eines thermoplastischen Elastomers ein Einbringen eines thermoplastischen Elastomers aufweist, das eine Shore-Härte in dem Bereich von 30 bis in dem Bereich von 80 auf der Shore-00-Skala hat.

## Revendications

1. Assemblage (32, 34, 104) d'afficheur à écran tactile comprenant :
un afficheur (32) ;
un revêtement (34) sensible au toucher disposé sur l'afficheur (32) ;
un plateau-support (104) comprenant une base (106) de plateau et une lèvre (108) reliée à, et espacée de, la base (106) de plateau pour supporter l'afficheur (32) et le revêtement (34) sensible au toucher ;
une pluralité de tampons élastiques (110, 126, 128, 134, 136) sur l'extérieur du plateau-support (104) comprenant des tampons (126, 128) sur la base de plateau et des tampons (134, 136) sur la lèvre, dans lequel les tampons sont surmoulés sur le plateau-support en y étant solidarisés de façon mécanique.

2. Assemblage (32, 34, 104) d'afficheur à écran tactile selon la revendication 1, comprenant un régisseur (36) connecté au revêtement (34) sensible au toucher pour recevoir une entrée provenant du revêtement sensible au toucher et pour connexion à un processeur (22).

3. Assemblage (32, 34, 104) d'afficheur à écran tactile selon la revendication 1 ou la revendication 2, dans lequel certains des tampons (126, 128) sur la base (106) de plateau sont liés à certains, respectifs, des tampons (134, 136) sur la lèvre (108).

4. Assemblage (32, 34, 104) d'afficheur à écran tactile selon l'une quelconque des revendications précédentes, dans lequel la pluralité de tampons comprend :
un tampon respectif (126, 134) sur la base (106) de plateau et/ou sur la lèvre (108) à chaque coin du plateau-support (104).

5. Assemblage (32, 34, 104) d'afficheur à écran tactile selon l'une quelconque des revendications 1 à 3, dans lequel la pluralité de tampons comprend au moins un tampon (128, 136) s'étendant à proximité du centre de la base de plateau.

6. Assemblage (32, 34, 104) d'afficheur à écran tactile selon l'une quelconque des revendications 1 à 3, dans lequel la pluralité de tampons comprend des tampons respectifs (128) s'étendant vers l'intérieur en direction du centre de la base de plateau à partir de ses côtés opposés.

7. Assemblage (32, 34, 104) d'afficheur à écran tactile selon l'une quelconque des revendications 1 à 3, dans lequel la pluralité de tampons comprend des tampons respectifs (126, 134) s'étendant sur la lèvre, au niveau des côtés opposés du plateau-support.

8. Assemblage (32, 34, 104) d'afficheur à écran tactile selon l'une quelconque des revendications précédentes, dans lequel les tampons (110, 126, 128, 134, 136) comprennent une matière à base de gel ou de mousse.

9. Assemblage (32, 34, 104) d'afficheur à écran tactile selon l'une quelconque des revendications 1 à 7, dans lequel les tampons (110, 126, 128, 134, 136) comprennent un élastomère thermoplastique.

10. Assemblage (32, 34, 104) d'afficheur à écran tactile selon la revendication 9, dans lequel les tampons (110, 126, 128, 134, 136) ont une dureté Shore de l'ordre de 30 à 80 sur l'échelle 00 de Shore.

11. Dispositif électronique (20) comprenant :
un boîtier (116) comprenant un dos (114) et un cadre (102) ;
un assemblage (32, 34, 104) d'afficheur à écran tactile selon l'une quelconque des revendications 1 à 9 ;
des composants logés dans le boîtier (116) et comprenant un régisseur (36) d'écran tactile connecté au revêtement (34) sensible au toucher et un processeur (22) connecté à l'afficheur (32) et au régisseur (36) d'écran tactile ;
dans lequel le plateau-support (104) est espacé du dos (114) du boîtier (116) et la pluralité de tampons (110, 126, 128, 134, 136) comprend des tampons (126, 128) entre le plateau (106) de base et le dos (116) et des tampons (134, 136) entre la lèvre (108) et le cadre (102).

12. Dispositif électronique (20) selon la revendication 11, comprenant une base (100) disposée entre le dos (114) et le cadre (102) et dans lequel les tampons (126, 128) entre la base (106) de plateau et le dos (114) comprennent des tampons entre la base (106) de plateau et la base (100).

13. Dispositif électronique (20) selon la revendication 12, dans lequel les tampons entre la base (106) de plateau et la base (100) comprennent au moins un tampon (128) formant pivot pour que le plateau-support (104) pivote sur lui.

14. Dispositif électronique (20) selon la revendication 11 ou la revendication 12, dans lequel certains des tampons (126, 128) entre la base (106) de plateau et le dos (114) sont reliés à certains, respectifs, des tampons (134, 136) entre la lèvre (108) et le cadre (102).

15. Procédé de fabrication du plateau-support selon l'une quelconque des revendications 1 à 7, comprenant :
la mise en place du plateau-support (104) dans un moule ;
la fermeture du moule ;
l'injection de gel ou de mousse dans le moule pour former la pluralité de tampons élastiques (110, 126, 128, 134, 136) sur le plateau-support (104) ;
le fait de laisser refroidir la pluralité de tampons élastiques (110, 126, 128, 134, 136) ;
l'enlèvement, du moule, du plateau-support (104) incluant la pluralité de tampons élastiques (110, 126, 128, 134, 136).

16. Procédé selon la revendication 15, dans lequel l'injection de gel comprend l'injection de gel ou de mousse au moins à chaque coin du plateau-support (104).

17. Procédé selon la revendication 16, dans lequel l'injection de gel ou de mousse comprend l'injection de gel ou de mousse à proximité d'emplacements centraux le long des grands côtés du plateau-support (104).

18. Procédé selon la revendication 15, dans lequel l'injection de gel ou de mousse comprend l'injection dans le moule d'un élastomère thermoplastique.

19. Procédé selon la revendication 18, dans lequel l'injection d'un élastomère thermoplastique comprend l'injection d'un élastomère thermoplastique ayant une dureté Shore de l'ordre de 30 à 80 sur l'échelle 00 de Shore.
